# EUROPEAN PATENT APPLICATION

(11) **EP 2 692 592 A1**
(43) Date of publication of application: **05.02.2014**
(21) Application number: 12179191.7
(22) Date of filing: 03.08.2012
(51) Int. Cl.: B60R 25/021

(54) **Antitheft device and antitheft device module for a steering column of a motor vehicle**

(71) Applicant: Valeo Securité Habitacle, 94046 Créteil Cedex (FR)
(72) Inventor: Renaud, Jean-Pierre, 94046 CRETEIL Cedex (FR); Desarmenien, Alain, 94046 CRETEIL CEDEX (FR)
(74) Representative: Larger, Solène

(57) **Abstract**

The invention relates to an antitheft device for a steering column of a motor vehicle destined to comprises a lock (3; 103) that can be operated in rotation by a key (13), said antitheft device comprises:
- a locking assembly (4) engaging in a cavity (8) of a steeling column (9) in a locked position to prevent the steering column (9) from rotating, the locking assembly (4) being configured to be operated by the rotation of the lock (3; 103) between the locked position and an unlocked position,
- a key sensor (5; 105) cooperating with a key (13) engaged in the lock (3; 103) and cooperating with the locking assembly (4) to prevent the release of the locking assembly (4) when a key (13) is engaged in the lock (3; 103),
wherein the locking assembly (4) further cooperates with the key sensor (5; 105) to prevent the disengagement of the key (13) from the lock (3; 103) when the locking assembly (4) is in an unlocked position.
This invention also relates to an associated antitheft device module.

## Description

The invention relates to an antitheft device for a steering column of a motor vehicle comprising a lock which can be operated by a key. The rotation of the lock controls the position of a locking assembly relatively to a steering column, the engagement of the locking assembly in a cavity of the steering column preventing its rotation. The invention also relates to an antitheft device module comprising such an antitheft device.

In order to prevent involuntary locking of the steering column on return of the key into the stop position while the vehicle may still be moving, antitheft devices must comprise means permitting the release of the locking assembly only by a voluntary action by the driver. In general this voluntary action is constituted by the withdrawal of the key.

However in some cases, it may happen that the key extraction releases the locking assembly between two successive cavities of the steering column. In this case, the steering column is not fully blocked in rotation, as the locking assembly is not fully engaged. The driver has to force the rotation of the steering wheel in order to bring the locking assembly down in the next cavity to really prevent the rotation of the steering column. If he does not, the driver may leave his vehicle while the steering column is not blocked. A robber could thus break the antitheft device with the locking assembly lying between two cavities, without triggering the locking of the locking assembly, as for example with a pin deadlocking.

To improve security, insurance companies require that cases where the driver may leave his vehicle while the steering column is not fully locked, should not occur.

An object of the invention is to propose an improved antitheft device for a steering column of a motor vehicle for which the driver can't leave his vehicle while the steering column is not fully locked.

This object is achieved by an antitheft device for a steering column of a motor vehicle destined to comprise a lock that can be operated in rotation by a key, said antitheft device comprises:
- a locking assembly engaging in a cavity of a steering column in a locked position to prevent the steering column from rotating, the locking assembly being configured to be operated by the rotation of the lock between the locked position and an unlocked position,
- a key sensor cooperating with a key engaged in the lock and cooperating with the locking assembly to prevent the release of the locking assembly when a key is engaged in the lock,
wherein the locking assembly further cooperates with the key sensor to prevent the disengagement of the key from the lock when the locking assembly is in an unlocked position.

Said antitheft device may include one or more of the following features:
- the locking assembly comprising a bolt engaging in the cavity of the steering column in the locked position and a bolt slider configured to be operated by the lock and configured to operate the bolt, the key sensor cooperating with the bolt slider of the locking assembly in the unlocked position,
- the bolt slider presents a retaining protuberance at one end retaining the key sensor against the key in an unlocked position and preventing the disengagement of the key from the lock,
- the retaining protuberance of the bolt slider is obtained by folding,
- the retaining protuberance comprises a first stop cooperating with the key sensor when a key is engaged in the lock, to block the sliding of the bolt slide, the first stop being released from the key sensor when the key sensor cooperates with a retaining notch of the key,
- the retaining protuberance comprises a radial stop which is radially shifted from the principal axis of the bolt slider, the radial stop being positioned so as to :
   - block the moving of the key sensor when the key sensor cooperates with a retaining notch of the key and when the bolt lies on a ridge of the steering column, and be away from the key sensor when the bolt engages in a cavity of the steering column,
   - the key sensor is returned radially against the rotation axis of the lock,
   - the first stop of the retaining protuberance comprises an axial and radial stop, the radial stop blocking the sliding of the bolt slider and the axial stop immobilizing the key sensor, when the key sensor is cooperating with a key engaged in the lock,
   - the key sensor is a swiveling lever, comprising a first end elastically returned against the rotation axis of the lock and a second end that may cooperate with the bolt slider, first and second end being able to pivot around a pivot axis of the key sensor.

Another object of the invention is an antitheft device module comprising an antitheft device for a steering column of a motor vehicle, a key comprising a retaining notch able to retain the key sensor, and a lock that can be operated in rotation by the key.

Thus, the key can be extracted from the lock only when the key sensor is fully released by the locking assembly, which corresponding to when the locking assembly is engaged in a cavity of the steering column in a locked position. The key is thus prevented from being extracted from the lock when the locking assembly is lying on a ridge of the steering column and not in a cavity. This improves the security of the antitheft device.

Other features and advantages of the invention will become apparent from the following description of a non-limited example and enclosed drawings.
For a better understanding of the invention with regard to the embodiments thereof, reference is made to the accompanying drawings, in which like numerals designate corresponding elements or sections throughout, and in which:
- Figure 1 is a perspective view of an antitheft device according to a first embodiment, in a sectional view, cut by a longitudinal median plane of the antitheft device, the antitheft device being represented in a unlocked position with the locking assembly retracted and with a key fully engaged in the lock of said antitheft device,
- Figure 2 is an enlarged and partial view of the antitheft device of figure 1,
- Figure 3 is a similar view of figure 1, in which the antitheft device has been represented in a second unlocked position and in which the bolt is lying on a ridge of the steering column, the key being partially disengaged from the lock,
- Figure 4 is an enlarged and partial view of the antitheft device of figure 3,
- Figure 5 is a similar view of figure 1, in which the antitheft device has been represented in a locked position with the locking assembly engaged in a cavity of the steering column, the key being fully disengaged from the lock,
- Figure 6 is an enlarged and partial view of the antitheft device of figure 5,
- Figure 7a is a simplified schema of a key, a key sensor and a bolt slider of an antitheft device for which the antitheft device is in an unlocked position while the key is fully engaged in the lock,
- Figure 7b is an illustration similar to figure 7a in which the antitheft device is in an unlocked position while the key is partially disengaged from the lock,
- Figure 7c is an illustration similar to figure 7a in which the antitheft device is in a locked position, the key sensor being removed from the retaining notch of the key,
- Figure 7d is an illustration similar to figure 7a in which the antitheft device is in a locked position while the key is fully disengaged from the lock,
- Figure 8 is a perspective and partial view of an antitheft device according to a second embodiment, the antitheft body of the antitheft device being represented in transparency, the antitheft device being represented in an unlocked position with the key fully engaged in the lock of said antitheft device, the figure also represents a schematic representation of the cooperation between the key and key sensor,
- Figure 9 is a similar view to figure 8, in which the antitheft device has been represented in a second unlocked position while the key is partially disengaged from the lock and cooperates with the retaining notch of the key,
- Figure 10a is an illustration similar to figure 8 in which the antitheft device is in the second unlocked position, the key being prevented from being extracted,
- Figure 10b is another view of elements of the antitheft device of figure 10a,
- Figure 11 is an illustration similar to figure 8 in which the antitheft device is in a locked position, the key moving to be extracted from the lock, and
- Figure 12 is an illustration similar to figure 8 in which the antitheft device is in a locked position, the key being fully extracted.

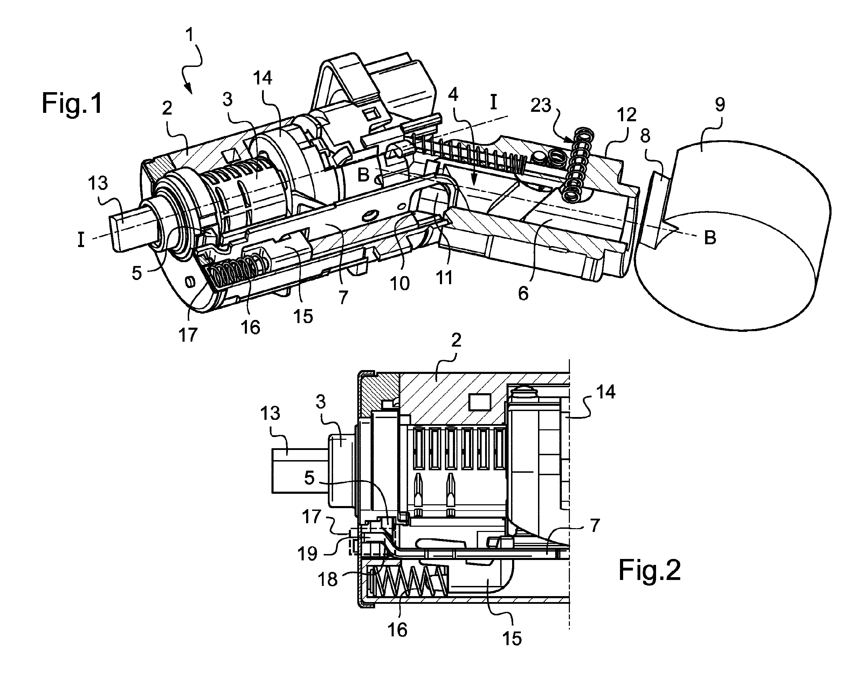

Figures 1 to 6 show an antitheft device for a steering column of a motor vehicle 1. The antitheft device 1 comprises a body antitheft 2 also called stator, a lock 3 also called rotor able to rotate in the body antitheft 2, a locking assembly 4 and a key sensor 5.

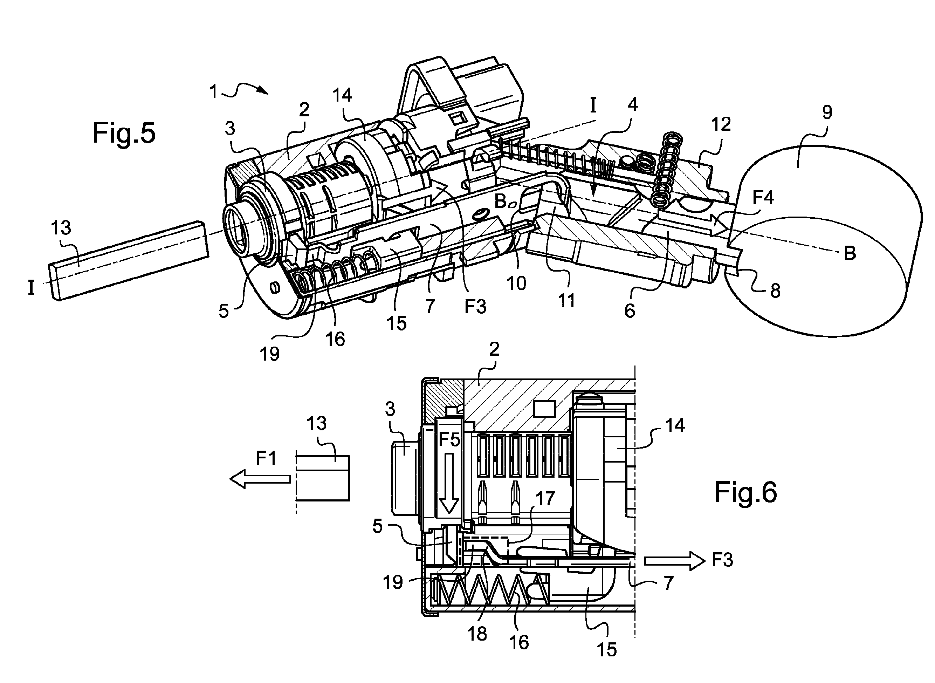

The locking assembly 4 comprises a bolt. 6 and a bolt slider 7. The bolt 6 is configured to engage in a cavity 8 of a steering column 9 in a locked position, to prevent the steering column 9 from rotating, as illustrated in figure 5, and is configured to be apart from the steering column 9 in an unlocked position, as illustrated in figure 1.

The bolt slider 7 is configured to be operated by the rotation of the lock 3 and is configured to operate the bolt 6. As represented on the example of figures 1 to 5, the bolt slide 7 presents a general longitudinal shape, along an axis parallel to the rotation axis I-I of the lock 3, along which it can slide. A first end of the bolt slider 7 comprises a folded ring 10 that cooperates with a hook 11 of the bolt 6 to operate it The slide of the bolt slider 7 drives the slide of the bolt 6 along a second axis B-B of a bolt guide 12 of the antitheft body 2, either towards the cavity 8 of the steering column 9 or back in the bolt guide 12.

The lock 3 rotates under the action of the corresponding key 13, between several angular positions, in conjunction with an electrical switch, for controlling various components of the vehicle and in particular to control the position of the locking assembly 4 between the locked position (stop position) and an unlocked position (start position), The lock 3 comprises transmission means including a cam 14. and an actuating finger 15. The actuating finger 15 is elastically returned against the cam 14 by a spring 16 and cooperates with the bolt slider 7 to operate the bolt slider 7 according to the angular position of the lock 3.

The key sensor 5 is elastically returned against the key 13 engaged in the lock 3 and is able to cooperate with the key 13 to prevent the release of the locking assembly 4 while the key 13 is engaged in the lock 3. Moreover, the locking assembly 4 is configured to cooperate with the key sensor 5 to prevent the disengagement of the key 13 from the lock 3 while the locking assembly 4. is in the unlocked position. For doing that, the key sensor 5 is for example able to cooperate with the bolt slider 7 of the locking assembly 4.

As an example, the bolt slider 7 presents a retaining protuberance 17 at one end, the end opposite to the one that being linked in translation with the bolt 6. This retaining protuberance 17 is configured to retain the key sensor 5 against the key 13 in the unlocked position, thus preventing the disengagement of the key 13 from the lock 3, as more visible on figure 2.

Thus, the key 13 can be extracted from the lock 3 only when the key sensor 5 is fully released by the locking assembly 4, which corresponds to the locking assembly 4 being engaged in the cavity 8 of the steering column 9 in a locked position. The key 13 is thus prevented from being extracted from the lock 3 when the locking assembly 4 is lying on a ridge of the steering column 9. This improves the security of the antitheft device 1.

In the first embodiment represented on figures 1 to 6 and 7a to 7d, the key sensor 5 comprises a first end 5a elastically returned radially against the rotation axis of the lock, and therefore against the key 13 when a key 13 is engaged in the lock 3. The key sensor 5 comprises a second end 5b that is visible of figure 2 for example, and which may cooperate with the retaining protuberance 17 of the bolt slider 7.

The retaining protuberance 17 of the bolt slider 7 comprises a first axial and radial stop 18 which cooperates with the second end 5b of the key sensor 5 when a key 13 is engaged in the lock 3, to block the sliding of the bolt slider 7.

More precisely, the radial stop blocks the sliding of the bolt slider 7.

The key sensor 5 is immobilized against the bolt slider 7 by the axial stop when cooperating with a ridge of the key 13 engaged in the lock 3.

The first axial and radial stop 18 of the bolt slider 7 is released from the key sensor 5 when the key sensor 5 cooperates with a retaining notch 20 of a key 13, The retaining notch 20 of the key 13 is a recess formed in the ridge which is able to retain the key sensor 5 and prevent it from moving, by trapping its second end 5b.

On the first example illustrated on figure 2, the first axial and radial stop 18 presents the shape of an inclined surface which may cooperate with a complementary inclined surface of the second end 5b of the key sensor 5.

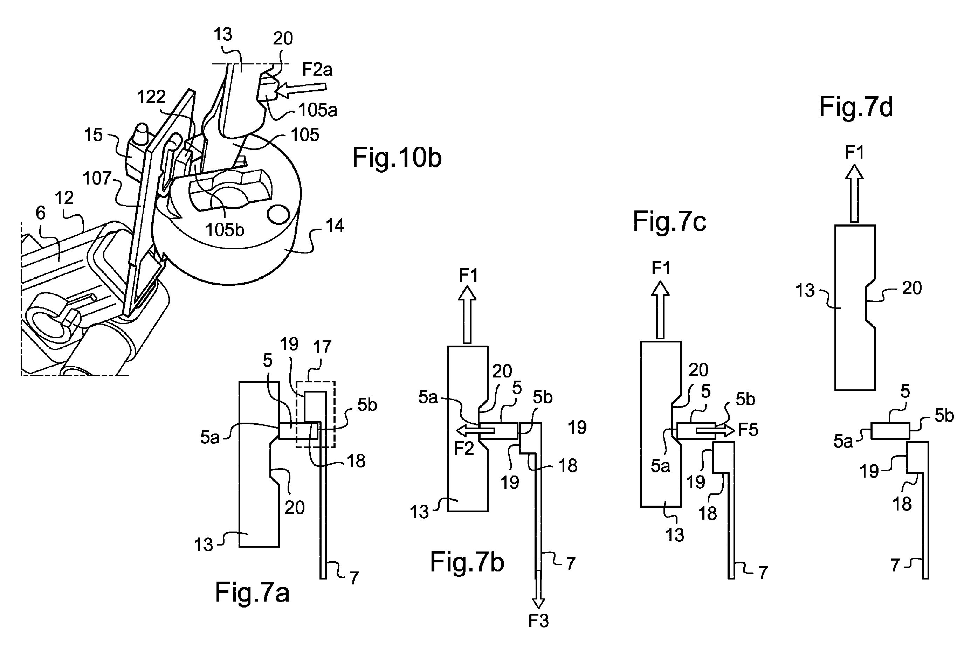

On a second example schematically illustrated on figure 7a, the first axial and radial stop 18 presents the shape of an inward corner such as in a hook or a shoulder, which is able to cooperate with a complementary outward corner of the second end 5b of the key sensor 5.

The retaining protuberance 17 also comprises a second radial stop 19, which is axially shifted from the first axial and radial stop 18 and which is radially shifted from the principal axis of the bolt slider 7.

More precisely, the second radial stop 19 is closer to the end side of the bolt slider 7 than the first axial and radial stop 18 and radially closer to the key sensor 5 than the first axial and radial stop 18.

The second radial stop 19 is positioned so as to block the radial sliding of the key sensor 5 when the key sensor 5 cooperates with the retaining notch 20 of the key 13 and when the bolt 6 lies on a ridge of the steering column 9.

The second radial stop 19 is also configured to be away from the key sensor 5, so as not to be in contact with the key sensor 5, when the bolt 6 engages in a cavity 8 of the steering column 9.

The retaining protuberance 17 of the bolt slider 7 may be obtained by folding.

In operation, in a case where the: antitheft device 1 is firstly in an unlocked position as illustrated on figures 1, 2 and 7a, the locking assembly 4 is retracted in the bolt guide 12 and the key 13 is fully engaged in the lock 3.

The key sensor 5 is radially pushed by the key 13 against the first axial and radial stop 18 of the retaining protuberance 17 of the bolt slider 7, retaining the bolt slider 7 and thus retaining the bolt 6 from sliding towards the steering column 9.

In this situation, the key sensor 5 cooperates with the key 13 to prevent the release of the locking assembly 4 while the key 13 is engaged in the lock 3.

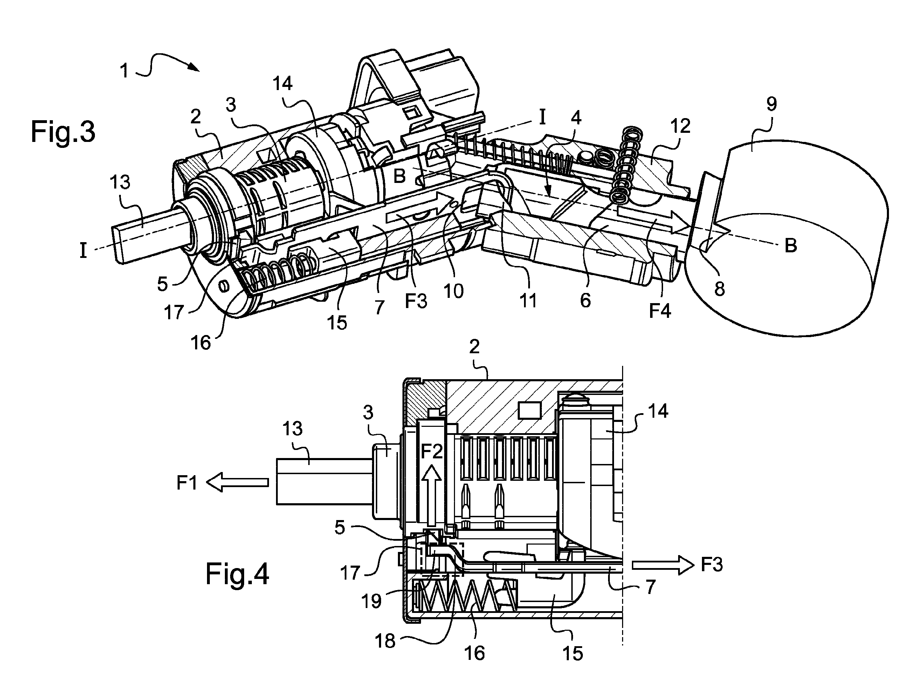

When a user tries to extract the key 13 from the lock 3 as illustrated on figures 3, 4 and 7b, the antitheft device 1 remains in an unlocked position as the bolt 6 is not engaged in the cavity 8 of the steering column 9.

As represented on figures 4 and 7b, the extraction of the key 13 partially disengaged the key 13 from the lock 3 as represented by the arrow F1. The first end of the key sensor 5, which is elatically returned against the key 13, follows the contours of the key 13 shape that is being extracted, and engages in retaining notch 20 of the key 13.

This causes a slight moving of the first end of the key sensor 5 against the key 13, along the direction represented by the arrow F2.

This engagement of the key sensor 5 in the retaining notch 20 moves the second end 5b which releases the first axial and radial stop 18 of the retaining protuberance 17 of the bolt slider 7. The key sensor 5 is thus no longer an obstacle to the sliding of the bolt slider 7, which starts to slide axially along the direction schematized by the arrow F3, driven by actuating finger 15 operated by the cam 14 of the lock 3 in stop position. The sliding of the bolt slider 7 operates the bolt 6 which also slides in the bolt guide 12 towards the steering column 9, as represented on figure 3 by the arrow F4.

In cases where the bolt 6 lies on a ridge of the steering column 9, as illustrated on figures 3, 4, and 7b, the bolt 6 is not engaged enough. The bolt 6 abuts the steering column 9, blocking in turn the sliding of the bolt slider 7 along direction F3.

In this intermediate position, the key sensor 5 abuts against the second radial stop 19 of the protuberance 17, preventing the key sensor 5 to be disengaged from the retaining notch 20 of the key 13 and thus, preventing the extraction of the key 13 (along defection schematized by the arrow F1). Therefore, the key sensor 5 prevents the key 13 from being extracted from the lock 3.

In cases where the bolt 6 engages the cavity 8 of the steering column 9, as illustrated on figures 5, 6, 7c and 7d, as for example, after the driver forced the rotation of the steering wheel and brought the bolt 6 down in the cavity 8 of the steering column 9, the antitheft device 1 is in a locked position.

The abutting of the bolt 6 against the steering column 9 is no longer an obstacle to the full sliding of the bolt slider 7 along the direction schematized by arrow F3. Thus, key sensor 5 is no more in contact with the second radial stop 19 of the bolt slider 7.

Therefore, the user can extract the key 13 as illustrated by the arrow F1. The sliding of the key 13 pushes the key sensor 5 against its elastic return.

The key sensor 5 thus moves axially out of the retaining notch 20 of the key 13 which is schematized by arrow F5 on figure 6 sand 7c.

The key 13 may thus be fully removed from the lock 3 when the bolt 6 is engaged in a cavity 8 of the steering column 9 (figures 5, 6 and 7d).

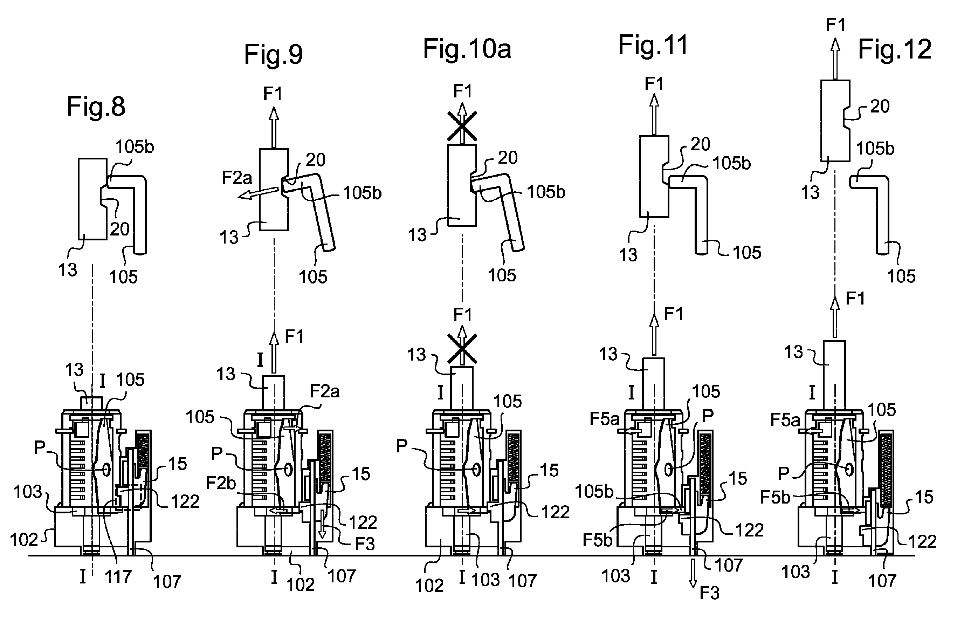

In a second embodiment illustrated on figures 8, 9, 10a, 10b, 11 and 12, the key sensor 105 is a swiveling lever.

For example, the key sensor 105 presents a pivot axis P perpendicular to the rotation axis I-I. The key sensor 105 also comprises a first end 105a that is elastically returned against the rotation axis of the lock, and therefore against the key 13 when a key 13 is engaged in the lock 103. The key sensor 105 also comprises a second end 105b that may cooperate with the bolt slider 107. The first and the second end 105a, 105b may pivot around the pivot axis P.

The retaining protuberance 117 of the bolt slider 107 cooperates with the second end 105b of the key sensor 105 when a key 13 is engaged in the lock 103, to block the sliding of the bolt slider 107.

The key sensor 105 is immobilized against the bolt slider 107 when cooperating with a ridge of the key 13 engaged in the lock 3 and thus blocks the sliding of the bolt slider 107 by the actuating finger 15 which lies on the side 105b of the key sensor (see figure 10b). When the key sensor 105 cooperates with a retaining notch 20 of a key 13, the bolt slider 107 is no more in contact with the retaining protuberance 117 of the key sensor 105.

The retaining protuberance 117 comprises a radial stop 122, which is radially shifted from the principal axis of the bolt slider 107.

The radial stop 122 is positioned so as to block the pivoting of the key sensor 105 when the key sensor 105 cooperates with the retaining notch 20 of the key 13 and when the bolt 6 lies ona ridge of the sleeting column 9.

The radial stop 122 is also configured to be away from the key sensor 105 when the bolt 6 engages in a cavity 8 of the steering column 9.

In operation, in a case where the antitheft device is firstly in an unlocked position as illustrated on figure 8, the locking assembly 4 is retracted in the bolt guide 12 and the key 13 is fully engaged in the lock 103.

The first end 105a of the key sensor 105 is radially pushed outwards by the key 13, pressing the second end 105b against the retaining protuberance 117 of the bolt slider 107.

The rotation of the key sensor 105 is prevented by the key 13. Therefore, the key sensor 105 made an obstacle to the axially sliding of the bolt slider 107. Thus, the key sensor 105 prevents the bolt 6 from sliding into the cavity 8 of the steering column 9 and thus, prevents the locking of the steering column 9 when the key 13 is engaged in the lock 103.

When a user tries to extract the key 13 from the lock 103 as illustrated on figures 9, 10a and 10b, the antitheft device remains in an unlocked position as the bolt 105 is not engaged in the cavity 8 of the steering column 9.

As represented on figure 9, the extraction of the key 13 partially disengaged the key 13 from the lock 103 as represented by the arrow F1. The first end 105a of the key sensor 105, which is elastically returned against the key 13, follows the contours of the key 13 shape that is being extracted, and engages in the retaining notch 20 of the key 13.

This causes a slight moving of the first end 105a of the key sensor 105 against the key 13, along the direction represented by the arrow F2a and thus, the pivoting of the key sensor 105 around the axis pivot P clockwise on the example of figure 9, the second end 105b of the key sensor 105, moving along to arrow F2b.

This engagement of the first end 105a of the key sensor 105 in the retaining notch 20 rotates the second end 105b of the key sensor 105. The key sensor 105 is thus no longer an obstacle to the sliding of the bolt slider 107, which starts to slide axially along the direction schematized by the arrow F3, driven by actuating finger 15 operated by the cam 14 of the lock 103 in stop position. The sliding of the bolt slider 107 operates the bolt 6 which also slides in the bolt guide 12 towards the steering column 9.

In cases where the bolt 6 lies on a ridge of the steering column 9, as illustrated on figures 10a and 10b, the bolt 6 is not engaged enough. The bolt 6 abuts the steering column 9, blocking in turn the sliding of the bolt slider 7 along direction F3.

In this intermediate position, the key sensor 105 abuts against the radial stop 122 of the protuberance 117, preventing the key sensor 105 from being disengaged from the retaining notch 20 of the key 13 and thus, preventing the extraction of the key 13 (along direction schematized by the crossed arrow F1). Therefore, the key sensor 105 prevents the key 13 from being extracted from the lock 103.

In cases where the bolt 6 engages the cavity 8 of the steering column 9, as illustrated on figures 11 and 12, as for example, after the driver forced the rotation of the steering wheel and brought the bolt 6 down in the cavity 8 of the steering column 9, the antitheft device is in a locked position.

The abutting of the bolt 6 against the steering column 9 is no longer an obstacle to the full sliding of the bolt slider 107 along the direction schematized by arrow F3. Thus, the second end 105b of the key sensor 105 is released from the radial stop 122 of the bolt slider 107.

Therefore, the user can extract the key 13 as illustrated by the arrow F1. The sliding of the key 13 pushes the first end 105a of the key sensor 105 against its elastic return.

The key sensor 105 thus moves axially out of the retaining notch 20 of the key 13 and pivots counterclockwise as schematized by arrow F5a and F5b on figures 11 and 12.

The key 13 may thus be fully removed from the lock 3 when the bolt 6 is engaged a cavity 8 of the steering column 9.

The key 13 is thus prevented from being extracted from the lock 3; 103 when the locking assembly 4 is lying on a ridge of the steering column 9, and not in a cavity 8. This improves the security of the antitheft device. A robber could not thus break the antitheft device without triggering the locking of the locking assembly 4, as for example with a pin deadlocking 23 as represented for example in figure 1.

## Claims

1. Antitheft device for a steering column of a motor vehicle destined to comprise a lock (3; 103) that can be operated in rotation by a key (13), said antitheft device comprises:
- a locking assembly (4) engaging in a cavity (8) of a steering column (9) in a locked position to prevent the steering column (9) from rotating, the locking assembly (4) being configured to be operated by the rotation of the lock (3; 103) between the locked position and an unlocked position,
- a key sensor (5; 105) cooperating with a key (13) engaged in the lock (3; 103) and cooperating with the locking assembly (4) to prevent the release of the locking assembly (4) when a key (13) is engaged in the lock (3; 103),
wherein the locking assembly (4) further cooperates with the key sensor (5; 105) to prevent the disengagement of the key (13) from the lock (3,103) when the locking assembly (4) is in an unlocked position.

2. Antitheft device according to claim 1, wherein the key sensor ( 5; 105) is blocked by the bolt slider (7; 107) of the locking assembly (4) in the unlocked position and the key sensor (5; 105) keeps the key (13) engaged in the lock.

3. Antitheft device according to claim 2, wherein the bolt slider (7; 107) presents a retaining protuberance (17; 117) at one end, retaining the key sensor (5; 105) in an unlocked position and preventing the disengagement of the key (13) from the lock.

4. Antitheft device according to claim 3, wherein the retaining protuberance (17; 117) of the bolt slider 7 is obtained by folding.

5. Antitheft device according to claim 3 or 4, wherein the retaining protuberance (17; 117) comprises a first stop (18) cooperating with the key sensor (5; 105) when a key (13) is engaged in the lock (3; 103), to block the sliding of the bolt slider (7; 107), the first stop (18) being released from the key sensor (5; 105) when the key sensor (5; 105) cooperates with a retaining notch (20) of the key (13).

6. Antitheft device according to any of claims 3 to 5, wherein the retaining protuberance (17; 117) comprises a radial stop (19; 122), which is radially shifted from the principal axis of the bolt slider (7; 107), the radial stop (19; 122) being positioned so as to :
- block the moving of the key sensor (5; 105) when the key sensor (5; 105) cooperates with a retaining notch (20) of the key (13) and when the bolt (6) lies on a ridge of the steeling column (9), andbe away from the key sensor (5; 105) when the bolt (6) engages in a cavity (8) of the steering column (9).

7. Antitheft device according to one of the previous claims, wherein the key sensor (5; 105) is returned radially against the rotation axis of the lock (3; 103).

8. Antitheft device according to claim 5 and claim 7, wherein the first stop (18) of the retaining protuberance (17) comprises an axial and radial stop, the radial stop blocking the sliding of the bolt slider (7) and the axial stop immobilizing the key sensor (5), when the key sensor (5) is cooperating with a key (13) engaged in the lock (3).

9. Antitheft device according to one of claims 1 to 6, wherein the key sensor (105) is a swiveling lever, comprising a first end (105a) elastically returned against the rotation axis of the lock (103) and a second end (105b) that may cooperate with the bolt slider (107), first and second end (105a, 105b) being able to pivot around a pivot axis (P) of the key sensor (105).

10. Antitheft device module comprising an antitheft device for a steering column of a motor vehicle according to one of the previous claims, a key (13) comprising a retaining notch (20) able to retain the key sensor (5; 105) and a lock (3, 103) that can be operated in rotation by the key (13).
